# EUROPÄISCHE PATENTSCHRIFT

(11) **EP 0 551 102 B1**
(45) Veröffentlichungstag und Bekanntmachung des Hinweises auf die Patenterteilung: **20.03.1996**
(21) Anmeldenummer: 93100101.0
(22) Anmeldetag: 07.01.1993
(51) Int. Cl.: C08F 20/12

(54) **(Meth)acrylatharze mit verminderter Vergilbung, ihre Herstellung und Verwendung**
(Meth)acrylate resins with reduced yellowing, their preparation and their use
Résines (meth)acrylates avec jaunissement réduits, leur préparation et leur usage

(30) Priorität: 09.01.1992 DE 4200354
(43) Veröffentlichungstag der Anmeldung: 14.07.1993
(73) Patentinhaber: Degussa Aktiengesellschaft, D-60311 Frankfurt (DE)
(72) Erfinder: Koch, Klaus-Uwe, Dr., W-6450 Hanau 9 (DE); Mich, Heidi, W-6054 Rodgau 3 (DE)

(56) Entgegenhaltungen:
- EP-A- 0 217 545
- EP-A- 0 270 709
- CHEMICAL ABSTRACTS, vol. 107, no. 22, 30. November 1987, Columbus, Ohio, US; abstract no. 199131, 'METHACRYLATE ESTER POLYMERS' Seite 14 ;Spalte 2 ;
- CHEMICAL ABSTRACTS, vol. 82, no. 10, 10. M rz 1975, Columbus, Ohio, US; abstract no. 59062 'Adhesion of Tetramethacryloylsilane Copolymer to Metal and Glass Substrates' Spalte 1.

## Beschreibung

Die Erfindung betrifft silanhaltige (Meth)acrylatharze bzw. polymerisierbare Mischungen mit verbesserten Vergilbungseigenschaften, Verfahren zu deren Herstellung und deren Verwendung.

Reine Poly(meth)acrylate haben hervorragende Bewitterungseigenschaften, d. h., sie sind stabil gegen Einstrahlungen von UV- oder sichtbarem Licht. Vergilbung spielt bei diesen Produkten in der Regel keine Rolle. Andererseits sind diese reinen Homo- oder Copolymerisate aus Methacrylaten nicht geeignet für Verklebungen, da sie nur sehr geringe adhäsive Eigenschaften zeigen. So können solche Polymere zwischen Glasscheiben in Massepolymerisation hergestellt werden, wobei nach dem Abkühlen sich die Scheiben leicht von der polymeren Zwischenschicht trennen lassen (EP 0 217 545 B1). Will man hingegen Verklebungen erhalten, wie z. B. bei Verbundglasscheiben, dann muß dem Reaktionsgemisch, aus dem das Polymere hergestellt wird, ein Haftvermittler zugegeben werden. Als Haftvermittler eignen sich insbesondere bei der Verklebung mit silikatischen Materialien (z. B. Glasscheiben) Silane (JP 49-80183). Diese Silane können mit in das Polymer einpolymerisiert sein und bewirken auch schon in verhältnismäßig geringen Konzentrationen eine sehr gute Haftvermittlung. Andererseits bewirken die Silane in Kombination mit anderen Bestandteilen jedoch auch eine erhebliche Vergilbung, die durch geeignete Wahl der Monomeren, der Katalysatoren, Beschleuniger, Inhibitoren oder durch Zugabe von UV-Absorptionsmitteln reduziert werden muß. Außerdem kann der subjektive Eindruck der Vergilbung durch entsprechend gefärbte Glasscheiben vermindert werden. Die letzteren Methoden sind jedoch nicht anwendbar bei UV-initiierten Systemen, da dann nicht genügend UV-Licht bis in die Monomerenmischung vordringen kann.

Aufgabe ist daher ein silanhaltiges Methacrylatharz mit verringerter Neigung zu Vergilbung sowie ein Verfahren zur Herstellung eines solchen Harzes bzw. entsprechende Mischungen.

Diese Aufgabe wird gelöst mit (meth)acrylathaltigen polymerisierbaren Mischungen der Zusammensetzung:

| | |
|---|---|
| (Meth)acrylsäureester (A) | 20 - 99,9 Gew.-% |
| Comonomere (B) | 0 - 79,9 Gew.-% |
| in A oder B lösliche Polymere (C) | 0 - 70,0 Gew.-% |
| Summe A + B + C | 59,9 - 99,9 Gew.-% |
| Silan | 0,1 - 30 Gew.-% |
| Weichmacher | 0 - 40 Gew.-% |

und, bezogen auf 100 Gew.-Teile der o. g. Komponenten

| | |
|---|---|
| Radikalbildner | 0,1 - 5 Gew.-Teile |
| Cu⁺ | 0,005 - 10 ppm |
| quartäre Ammoniumverbindung | 0,005 - 3 Teile |
| organische Schwefelverbindung | 0 - 5 Teile. |

Diese Komponenten können in Vormischungen gelagert und bereitgestellt werden. Die Vormischungen werden an Ort und Stelle innig vermischt, in die vorbereitete Form gegossen und auspolymerisiert. Solche Vormischungen können enthalten:
(I) die Monomere und gegebenenfalls gelöste Polymere, den Weichmacher, das Kupfer und gegebenenfalls die Schwefelverbindung;
und/oder (II) das Silan, zumindest einen Teil des Weichmachers, der quartären Ammoniumverbindung und gegebenenfalls die Schwefelverbindung
und/oder (III) den Radikalbildner, vorzugsweise einen Peroxyester, und zumindest einen Teil des Weichmachers.

Hinsichtlich der (Meth)acrylatkomponente (A) hat sich ein Gehalt von 60 - 99,75 Gew.-% als besonders günstig erwiesen. Die Silankomponente wird vorzugsweise zu 0,1 - 10 Gew.-% und besonders bevorzugt zu 0,2 - 4 Gew.-% eingesetzt.

Bei den (Meth)acrylsäureestern (A) hat sich herausgestellt, daß die Alkoholkomponente praktisch beliebig wählbar ist. So sind z. B. aliphatische, aromatische, mehrwertige, oligomere, polymere und funktionalisierte Alkohole möglich. Es wurde kein Beispiel gefunden, bei dem die Alkoholkomponente das Ergebnis beeinträchtigte.

Als (meth)acrylathaltige Komponente A sind besonders geeignet Methylmethacrylat, 2-Ethylhexyl(meth)acrylat, Ethylmethacrylat, n-Butylmethacrylat, i-Butylmethacrylat, Hydroxyethyl(meth)acrylat, Hydroxypropyl(meth)acrylat, n-Hexylmethacrylat, Cyclohexylmethacrylat, 2-Phenylethylmethacrylat, Ethyltriglycolmethacrylat, Butyl(meth)acrylat. Üblicherweise enthält die Monomerenmischung bis zu 10 Gew.-%, bevorzugt 0,5 bis 5 Gew.-% und insbesondere 1 bis 2 Gew.-% an Vernetzern, wie z. B. Triethylenglykoldimethacrylat, Allylmethacrylat, Ethylenglycoldimethacrylat, Diethylenglycoldimethacrylat, Triethylenglycoldimethacrylat, Tetraethylenglycoldimethacrylat, Polyethylenglycoldimethacrylat, 1,3-Butandioldimethacrylat, 1,4-Butandioldimethacrylat, 1,6-Hexandioldimethacrylat, 1,12-Dodecandioldimethacrylat, Bisphenol-A-dimethacrylat, Diurethandimethacrylat, Trimethylolpropantrimethacrylat, N,N-Methylenbismethacrylamid, 1,6-Hexandioldiacrylat, Divinylbenzol, Triallylcyanurat, Di-allylphthalat, Neopentylglycoldimethacrylat. Insbesondere die A-Komponente kann auch ein Prepolymer als lösliches Polymer enthalten. Das Polymere kann dabei als solches in dem Monomeren gelöst oder durch teilweise Polymerisation des Monomeren erhalten werden. Bevorzugt sind Vorpolymerisate aus (Meth)acrylaten, insbesondere aus Methylmethacrylat.

Als Comonomere eignen sich z. B. Styrol, Acrylnitril, Acrylamid, Methacrylamid, Methacrylsäure und Acrylsäure. Comonomere dienen der Modifikation der mechanischen Eigenschaften des Harzes, z. B. der Erhöhung der Steifigkeit. Grundsätzlich stören Copolymere das erfindungsgemäße Ergebnis nicht. Der Comonomergehalt ist meist unter 50 Gew.-%, vorzugsweise unter 40 Gew.-% und insbesondere 0 bis 5 Gew.-%. Kein Gehalt an Comonomeren ist bevorzugt.

Weichmacher werden üblicherweise zugegeben, um die Flexibilität der Polymerisate zu erhöhen. Besonders geeignet sind Dimethylphthalat, Diethylphthalat, Dipropylphthalat, Dibutylphthalat, Diisobutylphthalat, Butylbenzylphthalat, Dipentylphthalat, Dihexylphthalat, Diisoheptylphthalat, Di(2-ethylhexyl)phthalat, Diisooctylphthalat, Di-n-octylphthalat, Triethylcitrat, Tri-n-butylcitrat, Acetyltriethylcitrat, Acetyltri-n-butylcitrat (ATBC), Acetyltri-2-hexylcitrat, Acetyl-tri-n-hexylcitrat, Acetyltri-n-(hexyl-octyl-decyl)citrat, Acetyltri-n-(octyl)citrat.

Als Radikalbildner können Peroxide und ganz besonders günstig Peroxyester, wie z. B. tert. Butylperbenzoat (TBPB), tert. Butylper-2-ethylhexanoat verwendet werden.

Als Cu⁺ werden Kupfer-haltige organische Verbindungen verwendet, insbesondere solche, die in den Monomeren löslich sind. Geeignet sind z. B. Kupfernaphthenat, Kupferacetylacetonat. Das Cu⁺ dient als Beschleuniger.

Es hat sich herausgestellt, daß in den silanhaltigen Systemen, in denen grundsätzlich Ammoniumverbindungen eingesetzt werden, außer den quartären Ammoniumverbindungen alle anderen zu einer deutlichen Vergilbung führen. Zur Erfindung gehört daher auch die Verwendung von quartären Ammoniumverbindungen in (meth)acrylathaltigen und silanhaltigen polymerisierbaren Mischungen zur Verminderung der Vergilbungsneigung des entsprechend erhaltenen Harzes. Die erfindungsgemäß einzusetzende quartäre Ammoniumverbindung ist vorzugsweise aliphatisch, kann jedoch auch einen oder mehrere aromatische Reste enthalten, unter letzteren sind insbesondere Benzylreste geeignet. Vorzugsweise ist höchstens ein aromatischer bzw. Benzylrest in der quartären Ammoniumverbindung. Wenn der Arylrest mehr als ein C-Atom von dem Stickstoffatom entfernt ist, dann zeigt das Harz wieder deutliche Vergilbung, die jedoch gegenüber der Vergilbung durch tertiäre Ammoniumverbindungen noch toleriert werden kann. Üblicherweise hat die quartäre Ammoniumverbindung 4 - 45 C-Atome, besonders bevorzugt sind solche mit 8 - 38 C-Atomen und insbesondere solche mit mehr als 12 C-Atomen. Der einzelne Rest in der quartären Ammoniumverbindung hat vorzugsweise 1 - 25 C-Atome, bevorzugt 1 - 20 C-Atome und vorteilhaft 1 - 15 C-Atome, insbesondere 1 - 12 C-Atome. Als Anion sind Halogene oder Pseudohalogene, insbesondere Chlor geeignet. Besonders geeignet sind z. B. Trioctylmethylammoniumchlorid (TOMA) und Tetradecylbenzyldimethylammoniumchlorid (TdBDMA). Die Art und Größe der einzelnen Reste am Stickstoffatom hat nur untergeordnete Bedeutung, solange die quartäre Ammoniumverbindung in einer wirksamen Menge im zu polymerisierenden Gemisch löslich ist. Üblicherweise ist ein Rest ein niedriger Alkylrest, insbesondere Methyl, da solche quartären Ammoniumverbindungen besonders einfach zugänglich sind.

Als Silane sind z. B. 3-Methacryloxypropyltrimethoxysilan (MPTS) und auch 3-Mercaptopropyltrimethoxysilan, Vinyltriacetoxysilan, Vinyltriethoxysilan, Vinyltrimethoxysilan geeignet. Vorzugsweise werden die Silane einpolymerisiert und sind dann auch in größeren Mengen einsetzbar. Vorteilhaft sind auch Silane, die sich reaktiv mit dem Polymer verbinden, diese können dann gleichzeitig auch als Regler für die Kettenlänge dienen. Zu geringe Mengen an Silan erfüllen nicht mehr deren Einsatzzweck, führen z. B. zu einer schlechteren Verklebung mit Silikaten.

Schwefelverbindungen werden zugegeben als Kettenregler, wie sie in der radikalischen Polymerisation üblich sind.

Geeignet sind insbesondere Glycoldimercaptoacetat (GDMA), Thioglycolsäure, Dodecylmercaptan, Mercaptobernsteinsäure, Thioglycolsäureisooctoat.

Vorzugsweise ist das resultierende Polymer klar transparent und findet Verwendung in Verbundscheiben. Hierzu sind jedoch auch transluzente, z. B. opake Einstellungen geeignet, so daß auch mit klar-transparenten (Glas)Scheiben milchig weiße Verbundscheiben hergestellt werden können. Die opake Einstellung erhält man z. B. durch in A oder B lösliche Polymere, die mit der auspolymerisierten Matrix unverträglich sind oder durch in situ entstehende unverträgliche Polymere. Die Grundbausteine dieser Polymerisate können vielfältiger Natur sein, insbesondere aber Polymethacrylate und Copolymerisate damit, sowie Polystyrol und dessen Copolymerisate.

Für das Verfahren zur Herstellung der (Meth)acrylatharze werden die oben aufgezählten einzelnen Komponenten oder Vormischungen innig miteinander vermischt und üblicherweise einer Temperatur von 15 - 80°C ausgesetzt. Bevorzugt sind Temperaturen zwischen 20 und 30°C. Die Polymerisation erfolgt in der Regel in Masse und wird vorteilhaft durch Zusammenmischen der eingangs beschriebenen Vormischungen eingeleitet.

Zur Erfindung gehören auch die entsprechend hergestellten Harze, die insbesondere in Verbundscheiben Verwendung finden.

Die Erfindung wird anhand nachfolgender Beispiele näher erläutert, in denen Verbundglasscheiben, die das Hauptanwendungsgebiet der vorliegenden Erfindung darstellen, hergestellt und anschließend auf ihre Vergilbungsneigung überprüft werden.

### Beispiel 1 bis 14

In einem Glasgefäß werden die Monomere und gegebenenfalls der Weichmacher (I) unter Rühren bei Raumtemperatur innig miteinander vermischt. Polymethylmethacrylat (PMMA) wird über mehrere Stunden bei 40°C in Methylmethacrylat gelöst.

Zu 100 Gew.-Teilen dieser Mischung werden 1 Teil Peroxid (50 %ig in Weichmacher), 0,15 Teile Kupfernaphthenat (1 %ige Lösung in 2-Ethylhexylmethacrylat) ≙ 1,5 ppm Cu⁺ und 2 Teile eines Gemisches aus Amin, Silan und Weichmacher zugegeben.

Die gut durchmischte Reaktionsmischung wird zwischen zwei gereinigte Glasscheiben (Natron-Kalk-Glas) der Größe 300 mm x 300 mm x 1,5 mm gegossen, deren Rand durch eine Butylkautschukschnur abgedichtet ist. Die Polymerisation erfolgt in waagrechter Lage der Scheibe bei Raumtemperatur. Von jedem Beispiel werden zwei Verbundscheiben hergestellt.

Die erhaltenen Verbundscheiben werden je drei Tage bei 60°C oder 80°C gelagert. Anschließend wurde der b-Wert (Absolutwert der Vergilbung) der Verbundglasscheiben in einem Farbmeßgerät der Firma Pier-Electronic GmbH, Zweistrahlfotometer geprüft. Der Δ b-Wert gibt die Vergilbungszunahme durch die Temperung an.

Die Ergebnisse sind in der Tabelle zusammengestellt, es ist deutlich zu erkennen, daß tertiäre Amine zu einer deutlichen Vergilbung führen. Auch Phenylalkyle mit mehr als einem C-Atom im Alkylteil, tragen etwas zur Vergilbung bei.

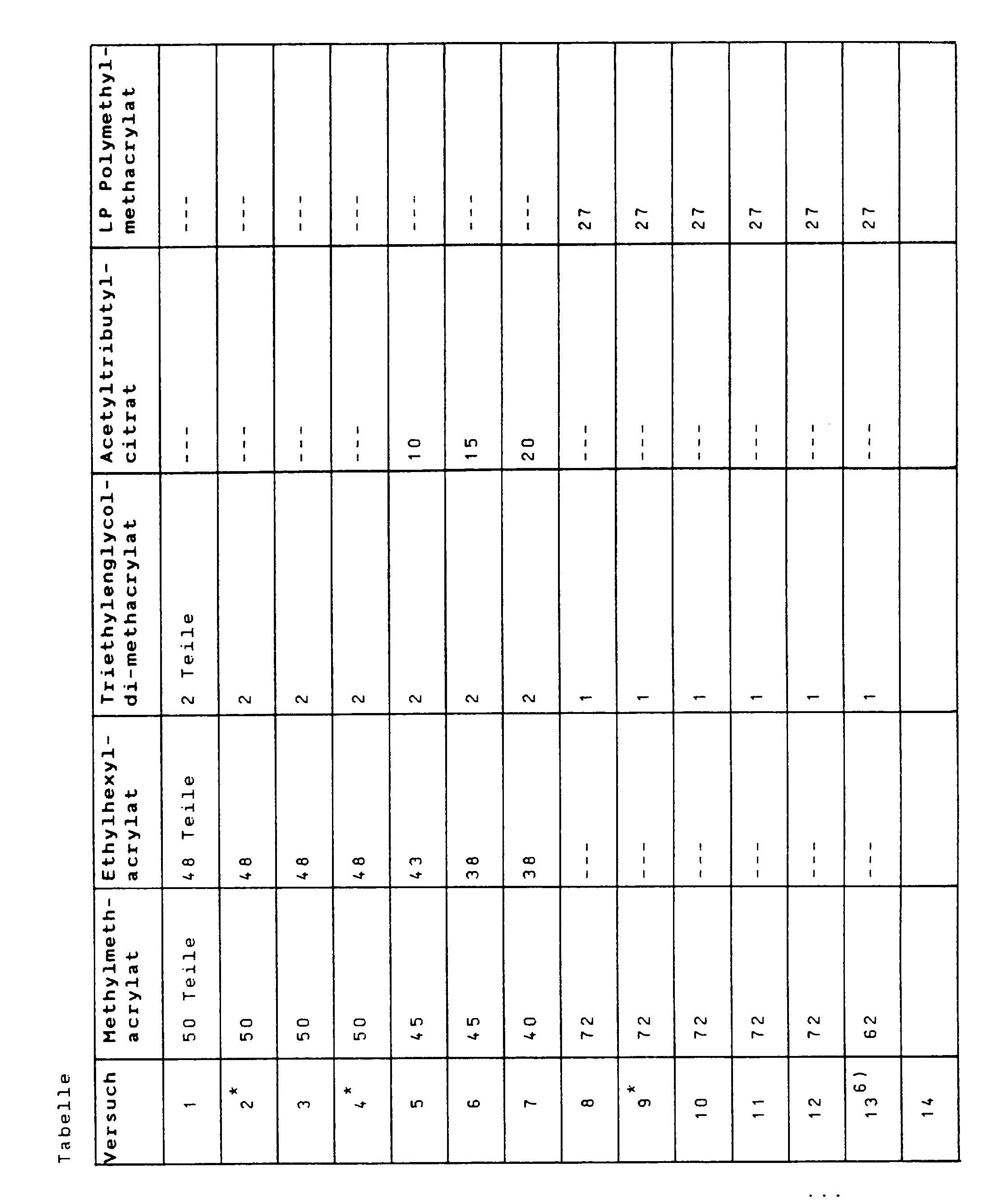

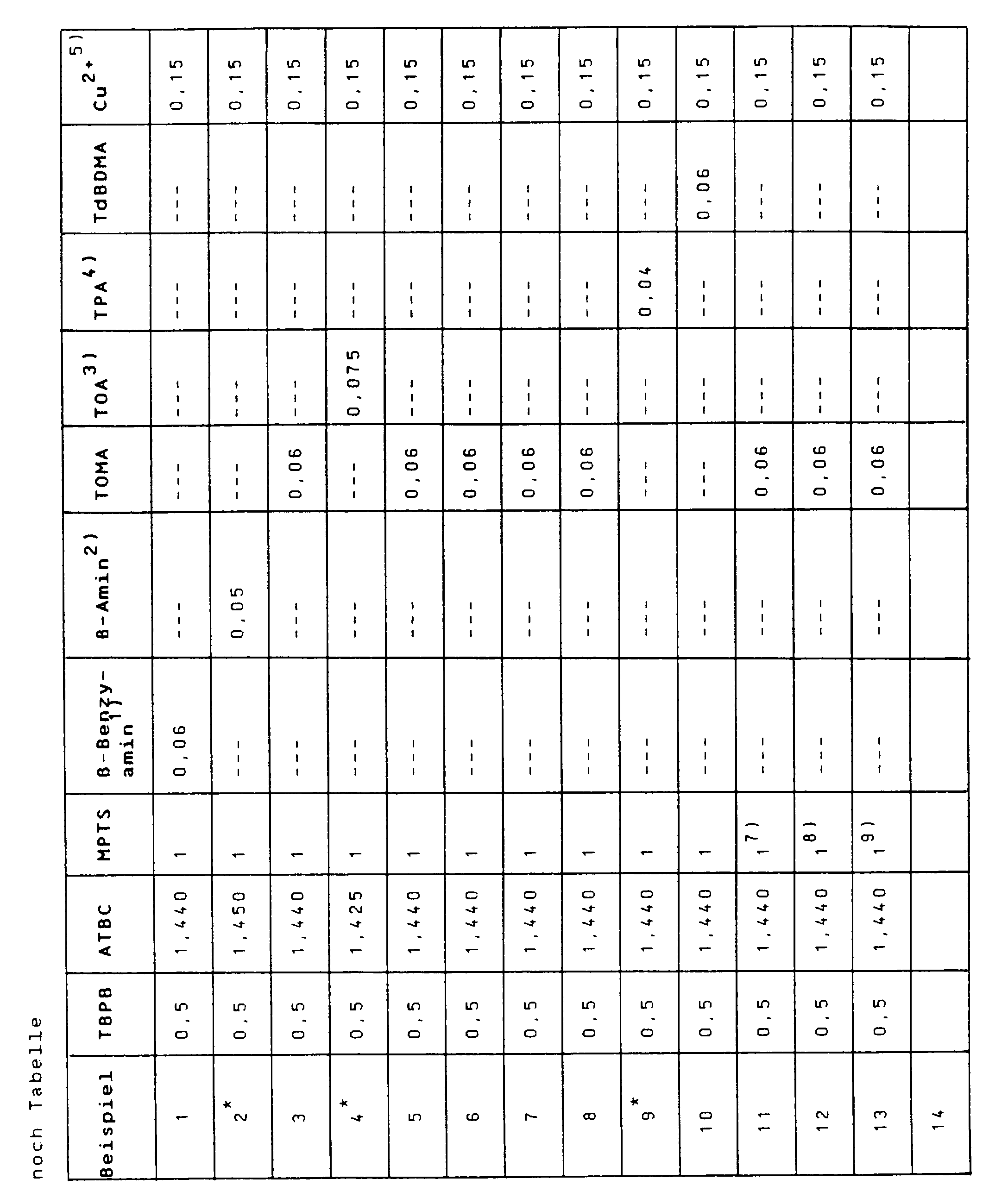

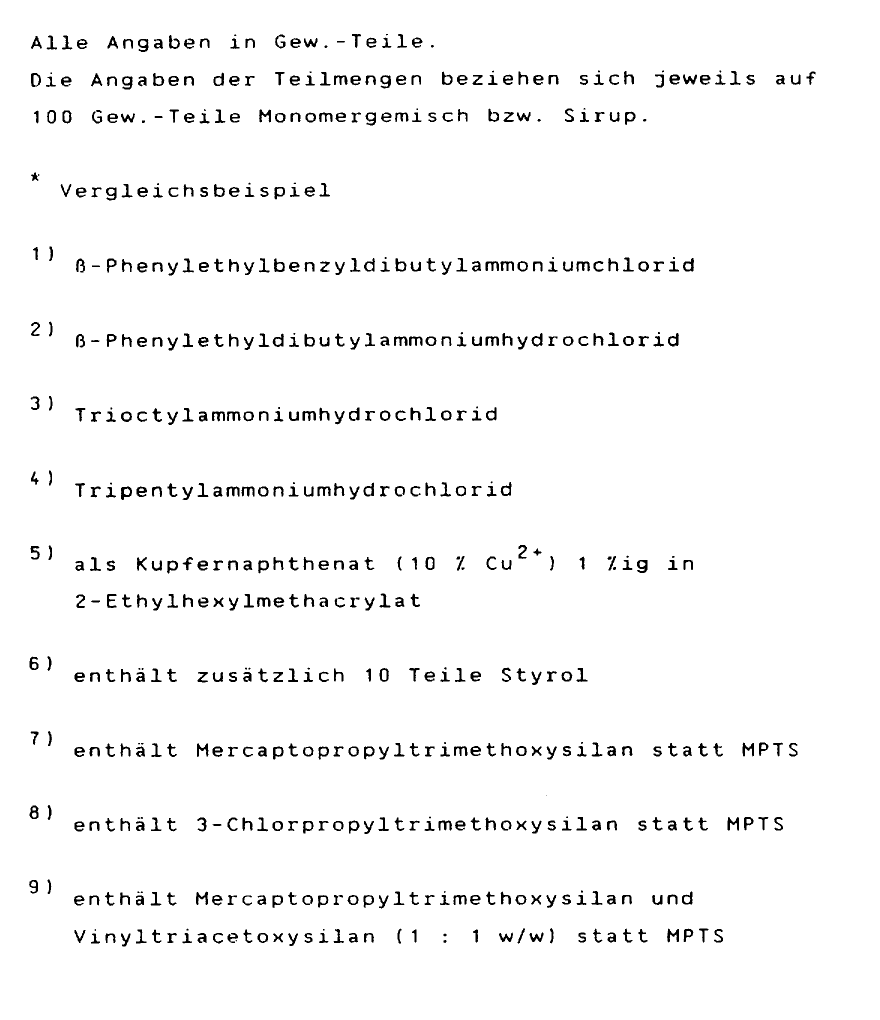

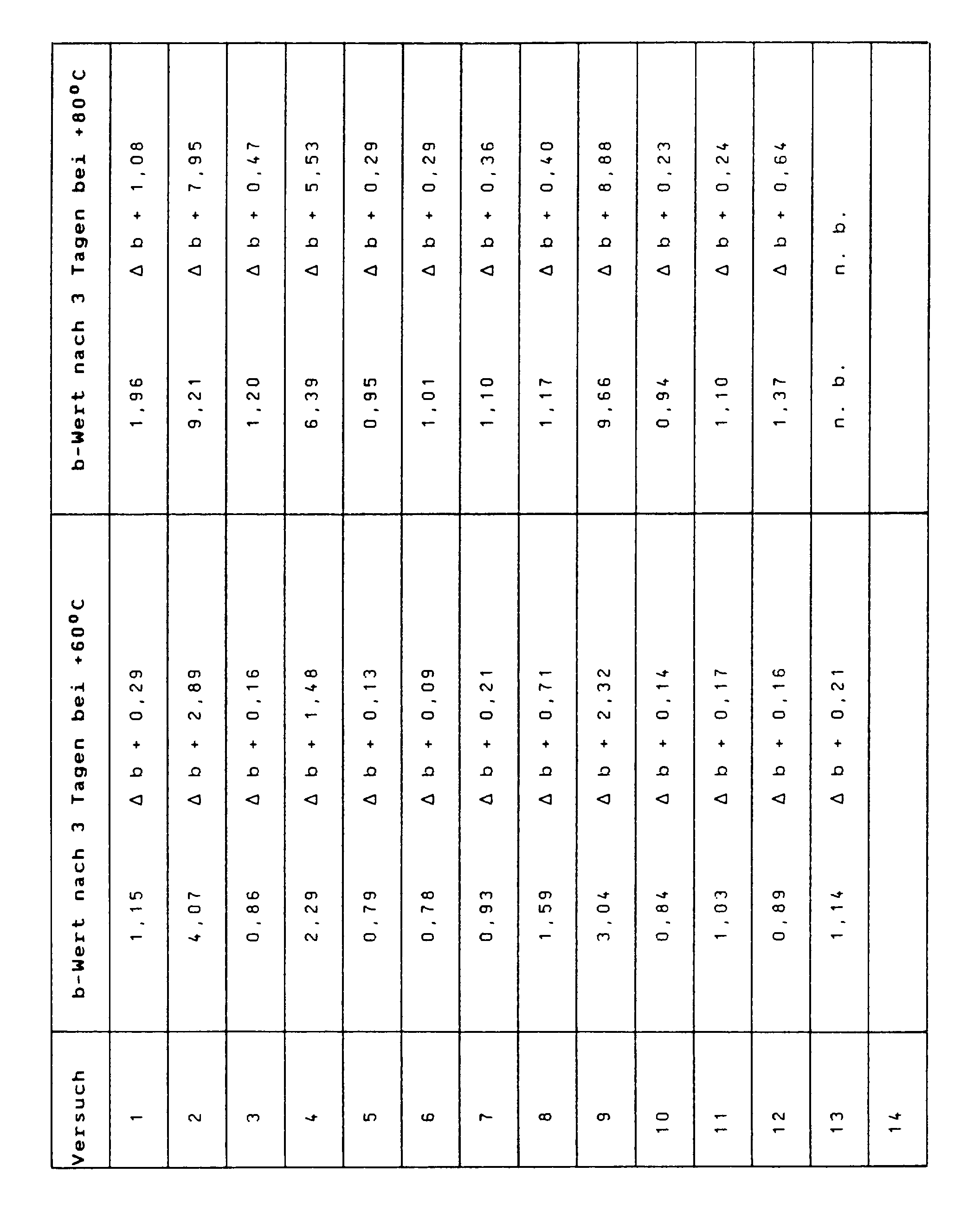

## Patentansprüche

1. (Meth)acrylathaltige polymerisierbare Mischung enthaltend
| | |
|---|---|
| (Meth)acrylat (A) | 20 - 99,9 Gew.-% |
| Comonomere (B) | 0 - 79,9 Gew.-% |
| in A oder B lösliche Polymere (C) | 0 - 70,0 Gew.-% |
| Summe A + B + C | 59,9 - 99,9 Gew.-% |
| Silan | 0,1 - 30 Gew.-% |
| Weichmacher | 0 - 40 Gew.-% |
und, bezogen auf 100 Teile der o. g. Komponenten,
| | |
|---|---|
| Radikalbildner | 0,1 - 5 Gew.-Teile |
| Cu⁺ | 0,005 - 10 ppm |
| quartäre Ammoniumverbindung | 0,005 - 3 Gew.-Teile |
| organische Schwefelverbindung | 0 - 5 Gew.-Teile. |

2. Mischung nach Anspruch 1,
**gekennzeichnet durch**
einen Comonomergehalt von 0 - 5 Gew.-%, vorzugsweise 0.

3. Mischung nach einem der vorhergehenden Ansprüche,
**dadurch gekennzeichnet**,
daß der Radikalbildner ein Peroxyester ist.

4. Mischung nach einem der vorhergehenden Ansprüche,
**dadurch gekennzeichnet,**
daß die quartäre Ammoniumverbindung aliphatische Reste und/oder eine oder mehrere Benzylgruppen als Reste aufweist.

5. Mischung nach einem der vorhergehenden Ansprüche,
**dadurch gekennzeichnet**,
daß die quartäre Ammoniumverbindung ein Halogenid, insbesondere ein Chlorid ist.

6. Mischung nach einem der vorhergehenden Ansprüche,
**dadurch gekennzeichnet**,
daß die quartäre Ammoniumverbindung 4 - 45 C-Atome enthält.

7. Mischung nach Anspruch 6,
**dadurch gekennzeichnet**,
daß jeder Rest in der quartären Ammoniumverbindung 1 - 25 C-Atome, insbesondere 1 - 15 C-Atome, aufweist.

8. Mischung nach einem der vorhergehenden Ansprüche,
**dadurch gekennzeichnet**,
daß es klar transparent, transluzent oder opak ist.

9. Verfahren zur Herstellung eines (meth)acrylischen Harzes durch Polymerisation von:
| | |
|---|---|
| (Meth)acrylat (A) | 20 - 99,9 Gew.-% |
| Comonomere (B) | 0 - 79,9 Gew.-% |
| in A oder B lösliche Polymere (C) | 0 - 70,0 Gew.-% |
| Summe A + B + C | 59,9 - 99,9 Gew.-% |
| Silan | 0,1 - 30 Gew.-% |
| Weichmacher | 0 - 40 Gew.-% |
und, bezogen auf 100 Teile der o. g. Komponenten,
| | |
|---|---|
| Radikalbildner | 0,1 - 5 Gew.-Teile |
| Cu⁺ | 0,005 - 10 ppm |
| quartäre Ammoniumverbindung | 0,005 - 3 Gew.-Teile |
| organische Schwefelverbindung | 0 - 5 Gew.-Teile. |

10. Verfahren nach Anspruch 9,
**dadurch gekennzeichnet**,
daß es als Massepolymerisation durchgeführt wird.

11. Verfahren nach Anspruch 9 oder 10,
**dadurch gekennzeichnet**,
daß es bei einer Temperatur von 15 - 80°C ausgeführt wird.

12. Verfahren nach einem der Ansprüche 9 bis 11,
**dadurch gekennzeichnet**,
daß die Monomere, gegebenenfalls gelöste Polymere, der Weichmacher, das Kupfer und gegebenenfalls die Schwefelverbindung vorgemischt werden.

13. Verfahren nach einem der Ansprüche 9 bis 12,
**dadurch gekennzeichnet**,
daß das Silan, zumindest ein Teil des Weichmachers, die quartäre Ammoniumverbindung und gegebenenfalls die Schwefelverbindung vorgemischt werden.

14. Verfahren nach einem der Ansprüche 9 bis 13,
**dadurch gekennzeichnet**,
daß der Radikalbildner, vorzugsweise ein Peroxyester, und zumindest ein Teil des Weichmachers vorgemischt werden.

15. Verwendung von quartären Ammoniumverbindungen in (meth)acrylathaltigen und silanhaltigen polymerisierbaren Mischungen zur Verminderung der Vergilbung.

16. Harz, erhältlich durch Polymerisation von:
| | |
|---|---|
| (Meth)acrylat (A) | 20 - 99,9 Gew.-% |
| Comonomere (B) | 0 - 79,9 Gew.-% |
| in A oder B lösliche Polymere (C) | 0 - 70,0 Gew.-% |
| Summe A + B + C | 59,9 - 99,9 Gew.-% |
| Silan | 0,1 - 30 Gew.-% |
| Weichmacher | 0 - 40 Gew.-% |
und, bezogen auf 100 Teile der o. g. Komponenten,
| | |
|---|---|
| Radikalbildner | 0,1 - 5 Gew.-Teile |
| Cu⁺ | 0,005 - 10 ppm |
| quartäre Ammoniumverbindung | 0,005 - 3 Gew.-Teile |
| organische Schwefelverbindung | 0 - 5 Gew.-Teile. |

17. Verwendung des Harzes nach Anspruch 16 oder der Mischung nach einem der Ansprüche 1 - 8 in einem Verbundglas oder zur Herstellung eines Verbundglases.

## Claims

1. Polymerisable (meth)acrylate mixture containing
| | |
|---|---|
| (meth)acrylate (A) | 20 - 99.9 wt.% |
| comonomers (B) | 0 - 79.9 wt.% |
| polymers (C) soluble in A or B | 0 - 70.0 wt.% |
| | |
| Sum of A + B + C | 59.9 - 99.9 wt.% |
| | |
| silane | 0.1 - 30 wt.% |
| plasticiser | 0 - 40 wt.% |
and, referred to 100 parts of the above-mentioned components,
| | |
|---|---|
| radical former | 0.1 - 5 parts by wt. |
| Cu⁺ | 0.005 - 10 ppm |
| quaternary ammonium compound | 0.005 - 3 parts by wt. |
| organic sulphur compound | 0 - 5 parts by wt. |

2. Mixture according to claim 1, characterised by a comonomer content of from 0 - 5 wt.%, preferably 0.

3. Mixture according to any one of the preceding claims, characterised in that the radical former is a peroxyester.

4. Mixture according to any one of the preceding claims, characterised in that the quaternary ammonium compound possesses as radicals aliphatic radicals and/or one or more benzyl groups.

5. Mixture according to any one of the preceding claims, characterised in that the quaternary ammonium compound is a halide, in particular a chloride.

6. Mixture according to any one of the preceding claims, characterised in that the quaternary ammonium compound contains 4 - 45 C atoms.

7. Mixture according to claim 6,
characterised in that each radical in the quaternary ammonium compound possesses 1 - 25 C atoms, in particular 1 - 15 C atoms.

8. Mixture according to any one of the preceding claims, characterised in that it is clearly transparent, translucent or opaque.

9. Method for the preparation of a (meth)acrylic resin by polymerisation of:
| | |
|---|---|
| (meth)acrylate (A) | 20 - 99.9 wt.% |
| comonomers (B) | 0 - 79.9 wt.% |
| polymers (C) soluble in A or B | 0 - 70.0 wt.% |
| | |
| Sum of A + B + C | 59.9 - 99.9 wt.% |
| | |
| silane | 0.1 - 30 wt.% |
| plasticiser | 0 - 40 wt.% |
and, referred to 100 parts of the above-mentioned components,
| | |
|---|---|
| radical former | 0.1 - 5 parts by wt. |
| Cu⁺ | 0.005 - 10 ppm |
| quaternary ammonium compound | 0.005 - 3 parts by wt. |
| organic sulphur compound | 0 - 5 parts by wt. |

10. Method according to claim 9,
characterised in that it is carried out as a mass polymerisation.

11. Method according to claim 9 or 10,
characterised in that it is carried out at a temperature of from 15 to 80°C.

12. Method according to any one of claims 9 to 11,
characterised in that the monomers, optionally the dissolved polymers, the plasticiser, the copper and optionally the sulphur compound are premixed.

13. Method according to any one of claims 9 to 12,
characterised in that the silane, at least a part of the plasticiser, the quaternary ammonium compound and optionally the sulphur compound are premixed.

14. Method according to any one of claims 9 to 13,
characterised in that the radical former, which is preferably a peroxyester, and at least a part of the plasticiser are premixed.

15. Use of quaternary ammonium compounds in (meth)acrylate-containing and silane-containing polymerisable mixtures for the lessening of yellowing.

16. Resin, obtainable by polymerisation of:
| | |
|---|---|
| (meth)acrylate (A) | 20 - 99.9 wt.% |
| comonomers (B) | 0 - 79.9 wt.% |
| polymers (C) soluble in A or B | 0 - 70.0 wt.% |
| | |
| Sum of A + B + C | 59.9 - 99.9 wt.% |
| | |
| silane | 0.1 - 30 wt.% |
| plasticiser | 0 - 40 wt.% |
and, referred to 100 parts of the above-mentioned components,
| | |
|---|---|
| radical former | 0.1 - 5 parts by wt. |
| Cu⁺ | 0.005 - 10 ppm |
| quaternary ammonium compound | 0.005 - 3 parts by wt. |
| organic sulphur compound | 0 - 5 parts by wt. |

17. Use of the resin according to claim 16 or of the mixture according to any one of claims 1 to 8 in a laminated glass or for the production of a laminated glass.

## Revendications

1. Mélange polymérisable à base de (méth)acrylate et contenant :
| | |
|---|---|
| (Méth)acrylate (A) | 20 à 99,9 % en poids |
| Comonomères (B) | 0 à 79,9 % en poids |
| Polymères (C) solubles dans A ou B | 0 à 70,0 % en poids |
| Somme A + B + C | 59,9 à 99,9 % en poids |
| Silane | 0,1 à 30 % en poids |
| Plastifiant | 0 à 40 % en poids |
et, par rapport à 100 parties des composants précités,
| | |
|---|---|
| Formateur de radicaux | 0,1 à 5 parties en poids |
| Cu⁺ | 0,005 à 10 ppm |
| Composé d'ammonium quaternaire | 0,005 à 3 parties en poids |
| Composé de soufre organique | 0 à 5 parties en poids. |

2. Mélange selon la revendication 1, caractérisé par une teneur en comonomères de 0 à 5 % en poids, de préférence 0.

3. Mélange selon l'une quelconque des revendications précédentes, caractérisé en ce que le formateur de radicaux est un peroxyester.

4. Mélange selon l'une quelconque des revendications précédentes, caractérisé en ce que le composé d'ammonium quaternaire présente des radicaux aliphatiques et/ou un ou plusieurs groupes benzyle comme radicaux.

5. Mélange selon l'une quelconque des revendications précédentes, caractérisé en ce que le composé d'ammonium quaternaire est un halogénure, en particulier un chlorure.

6. Mélange selon l'une quelconque des revendications précédentes, caractérisé en ce que le composé d'ammonium quaternaire contient 4 à 45 atomes de carbone.

7. Mélange selon la revendication 6, caractérisé en ce que chaque radical du composé d'ammonium quaternaire comporte 1 à 25 atomes de carbone, en particulier 1 à 15 atomes de carbone.

8. Mélange selon l'une quelconque des revendications précédentes, caractérisé en ce qu'il est transparent clair, translucide ou opaque.

9. Procédé de préparation d'une résine de (méth)acrylate par polymérisation des substances suivantes:
| | |
|---|---|
| (Méth)acrylate (A) | 20 à 99,9 % en poids |
| Comonomères (B) | 0 à 79,9 % en poids |
| Polymères (C) solubles dans A ou B | 0 à 70,0 % en poids |
| Somme A + B + C | 59,9 à 99,9 % en poids |
| Silane | 0,1 à 30 % en poids |
| Plastifiant | 0 à 40 % en poids |
et, par rapport à 100 parties des composants précités,
| | |
|---|---|
| Formateur de radicaux | 0,1 à 5 parties en poids |
| Cu⁺ | 0,005 à 10 ppm |
| Composé d'ammonium quaternaire | 0,005 à 3 parties en poids |
| Composé de soufre organique | 0 à 5 parties en poids. |

10. Procédé selon la revendication 9, caractérisé en ce qu'il est réalisé par polymérisation en masse.

11. Procédé selon la revendication 9 ou 10, caractérisé en ce qu'il est réalisé à une température de 15 à 80°C.

12. Procédé selon l'une quelconque des revendications 9 à 11, caractérisé en ce que les monomères, éventuellement des polymères dissous, le plastifiant, le cuivre et éventuellement le composé de soufre sont prémélangés.

13. Procédé selon l'une quelconque des revendications 9 12, caractérisé en ce que le silane, au moins une partie du plastifiant, le composé d'ammonium quaternaire et éventuellement le composé de soufre sont prémélangés.

14. Procédé selon l'une quelconque des revendication 9 à 13, caractérisé en ce que le formateur de radicaux, de préférence un peroxyester, et au moins une partie du plastifiant sont prémélangés.

15. Utilisation de composés d'ammonium quaternaire dans des mélanges polymérisables contenant du (méth)acrylate et du silane pour réduire le jaunissement.

16. Résine obtenue par polymérisation des substances suivantes :
| | |
|---|---|
| (Méth)acrylate (A) | 20 à 99,9 % en poids |
| Comonomères (B) | 0 à 79,9 % en poids |
| Polymères (C) solubles dans A ou B | 0 à 70,0 % en poids |
| Somme A + B + C | 59,9 à 99,9 % en poids |
| Silane | 0,1 à 30 % en poids |
| Plastifiant | 0 à 40 % en poids |
et, par rapport à 100 parties des composants précités,
| | |
|---|---|
| Formateur de radicaux | 0,1 à 5 parties en poids |
| Cu⁺ | 0,005 à 10 ppm |
| Composé d'ammonium quaternaire | 0,005 à 3 parties en poids |
| Composé de soufre organique | 0 à 5 parties en poids. |

17. Utilisation de la résine selon la revendication 16 ou du mélange selon l'une quelconque des revendications 1 à 8 dans un verre composite ou pour la fabrication d'un verre composite.
